# FASCICULE DE BREVET EUROPEEN

(11) **EP 0 642 634 B1**
(45) Date de publication et mention de la délivrance du brevet: **21.02.1996**
(21) Numéro de dépôt: 93913064.7
(22) Date de dépôt: 25.05.1993
(51) Int. Cl.: F16D 65/56

(54) **DISPOSITIF AUXILIAIRE DE FREINAGE A TAMBOUR AVEC RATTRAPAGE DE JEU AUTOMATIQUE PERFECTIONNE**
TROMMELBREMSE MIT HILFSEINRICHTUNG ZUM AUTOMATISCHEN NACHSTELLEN
AUXILIARY DRUM BRAKE DEVICE HAVING ADVANCED AUTOMATIC CLEARANCE ADJUSTMENT

(30) Priorité: 05.06.1992 FR 9206949
(43) Date de publication de la demande: 15.03.1995
(73) Titulaire: ALLIEDSIGNAL EUROPE SERVICES TECHNIQUES, F-93700 Drancy (FR)
(72) Inventeur: MALIGNE, Jean, Charles, F-93300 Aubervilliers (FR)
(74) Mandataire: Bentz, Jean-Paul
(86) Numéro de dépôt international: FR9300504
(87) Numéro de publication internationale: WO9325826

(56) Documents cités:
- EP-A- 0 013 674
- EP-A- 0 085 233
- DE-A- 2 900 158
- DE-B- 1 269 424
- US-A- 3 216 533
- US-A- 3 958 674

## Description

La présente invention concerne un dispositif de freinage à tambour, comportant :
- une chape ;
- des premier et second segments de frein arqués présentant des premières et secondes extrémités respectives placées en vis-à-vis ;
- un écarteur solidaire de la chape et susceptible d'être actionné pour éloigner l'une de l'autre les premières extrémités des deux segments ;
- une entretoise dont la longueur est réglée par un élément de vis et qui maintient les secondes extrémités des deux segments à distance l'une de l'autre ; et
- des moyens de réglage pour régler la longueur de l'entretoise en fonction d'une usure des segments, ces moyens comprenant une roue dentée solidaire de l'élément de vis, un balancier à cliquet, articulé sur le second segment et susceptible de faire tourner la roue dentée dans un sens propre à allonger l'entretoise, et une timonerie pour actionner le balancier, cette timonerie comprenant elle-même un levier articulé en un point du second segment et deux tringles reliées par ce levier, la première tringle ayant une première extrémité articulée sur un point d'appui et une seconde extrémité articulée sur le levier pour mouvoir ce dernier en cas d'actionnement de l'écarteur, et la seconde tringle ayant une première extrémité articulée sur le levier et une seconde extrémité articulée sur le balancier de manière à transmettre à ce dernier le mouvement du levier.

Des dispositifs de ce type sont connus dans l'art antérieur pour leur usage sur les véhicules terrestres à moteur, et un dispositif voisin est par exemple illustré dans le brevet DE 1 269 424, dans lequel la timonerie comprend effectivement deux tringles et un levier, à la différence par exemple des dispositifs des brevets US 3 958 674 ou 3 216 533 dans lesquels un simple câble fait office de timonerie.

Cependant, les dispositifs de freinage conçus selon un tel agencement ne sont connus que dans des applications pour lesquelles ils constituent l'organe de freinage principal et dans lesquelles le rattrapage de jeu n'est obtenu et ne peut apparaître que sous l'effet d'une rotation des roues freinées et des tambours correspondants.

Le problème que l'invention se propose de résoudre consiste à adapter le système de rattrapage automatique de jeu utilisé sur les dispositifs connus de manière à le rendre utilisable également pour les dispositifs auxiliaires de freinage, en particulier pour ceux qui sont constitués par un frein à tambour actionné mécaniquement (frein à main par exemple), logé à l'intérieur d'un frein à disque, selon une disposition connue sous la dénomination anglo-saxonne de "drum-in-hat", et dépourvu de point fixe, c'est-à-dire adoptant la conception dite "duo-servo".

Les difficultés à surmonter pour parvenir à une telle adaptation sont multiples.

Tout d'abord, le frein auxiliaire est toujours, sauf cas d'urgence, serré à l'arrêt, de sorte que les contraintes subies par les segments sont très différentes de celles qui apparaissent dans un frein principal, notamment en raison de l'absence du phénomène d'enroulement qui, dans la conception duo-servo, s'applique aux deux segments à la fois.

Par ailleurs, le frein auxiliaire, précisément parce qu'il n'est normalement serré qu'à l'arrêt, ne subit qu'une usure minime, de sorte que les jeux à rattraper sont beaucoup plus petits que dans un frein principal.

Enfin, un frein auxiliaire est généralement actionné par un écarteur mécanique, lequel ne développe qu'une force relativement faible par rapport à celle que développe un actionneur hydraulique, ce qui conduit à limiter encore le débattement des segments de frein.

Pour surmonter ces difficultés, le dispositif de freinage de l'invention est essentiellement caractérisé en ce que le point d'appui de la première tringle est un point du premier segment de frein, alors que les premier et second segments sont montés flottants sur la chape, cet arrangement permettant d'obtenir le rattrapage de jeu par un actionnement du frein aussi bien à l'arrêt du véhicule freiné qu'en marche avant ou en marche arrière.

Le dispositif ainsi constitué peut notamment être actionné par un écarteur de type mécanique.

De préférence, le point d'articulation du levier, la seconde extrémité de la première tringle, et la première extrémité de cette même tringle déterminent un premier angle voisin de 120° ou supérieur à cette valeur.

Selon un mode préféré de réalisation de l'invention, le point d'articulation du levier est sensiblement à équidistance de la seconde extrémité de la première tringle et de la première extrémité de la seconde tringle, et les première et seconde extrémités de la seconde tringle déterminent une direction au moins voisine de celle de la bissectrice dudit premier angle.

Par exemple, le levier comprend essentiellement un anneau relié au second segment par un crochet traversant un orifice pratiqué dans ce segment, et la seconde extrémité de la première tringle et la première extrémité de la seconde tringle sont repliées en boucle sur l'anneau de manière à l'enserrer.

D'autres caractéristiques et avantages de l'invention ressortiront clairement de la description qui en est faite ci-après, à titre indicatif et nullement limitatif, en référence au dessin annexé, sur lequel :

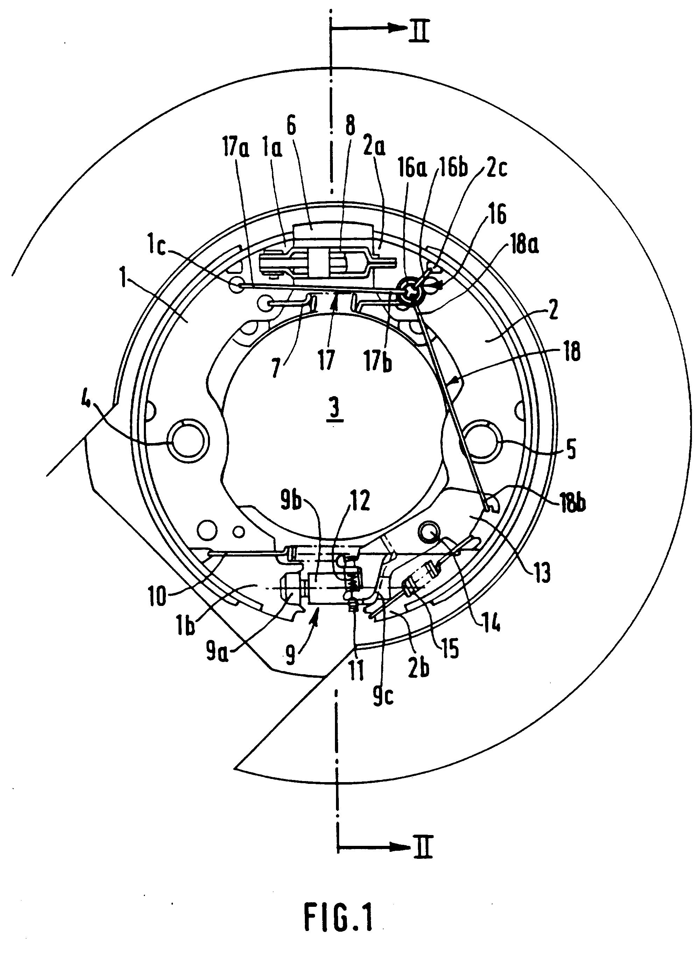

- la Figure 1 est une vue de face d'un dispositif conforme à l'invention, et
- la Figure 2 est une vue en coupe de ce même dispositif, suivant la ligne II-II de la Figure 1.

Le dispositif de l'invention comprend un premier et un second segments de frein, 1 et 2, en arc de cercle, montés flottant sur une chape 3 et présentant des premières 1a, 2a et secondes extrémités 1b, 2b, placées en vis-à-vis.

Chaque segment est relié à la chape par un ressort tel que 4, 5 et les premières extrémités 1a et 2a des segments 1 et 2 reposent normalement sur un appui 6 solidaire de la chape, sous l'effet d'un ressort 7 qui tend à les rapprocher l'une de l'autre.

Un écarteur mécanique 8, également solidaire de la chape 3, est cependant prévu pour éloigner l'une de l'autre ces extrémités 1a, 2a, et écarter les segments 1 et 2, à l'encontre de la force du ressort 7, pour les appuyer contre la face interne d'un tambour de frein (non représenté).

Les secondes extrémités 1b, 2b, des segments 1 et 2 sont maintenues à distance l'une de l'autre par une entretoise 9 montée flottante par rapport à la chape 3. La longueur de cette entretoise, constituée par une vis 9a, un écrou 9b et un embout 9c , peut être réglée par rotation de l'écrou 9b pour rattraper l'usure des segments, par un écartement des secondes extrémités 1b, 2b de ces segments, à l'encontre de la force d'un ressort 10.

A cette fin, l'écrou 9b est doté d'une roue dentée 11 susceptible de coopérer avec un cliquet 12 porté par un balancier 13.

Ce balancier est articulé sur le second segment 2 autour d'un axe 14 de manière à pouvoir être tiré par une timonerie, à l'encontre de la force d'un ressort 15, et subir ainsi une rotation d'axe 14 au cours de laquelle le cliquet 12 entraîne la roue dentée 11.

La timonerie en question, sur laquelle se concentrent les principales caractéristiques de l'invention, comprend un levier 16 articulé en un point 2c du second segment et reliant entre elles une première et une seconde tringles 17 et 18.

La première extrémité 17a de la première tringle 17 est articulée sur un point d'appui 1c du premier segment 1 et la seconde extrémité 17b de cette même tringle est articulée sur le levier 16.

De son côté, la seconde tringle 18 est articulée par sa première extrémité 18a sur le levier 16 et par sa seconde extrémité 18b sur le balancier 13 pour transmettre à ce dernier le mouvement du levier 16.

Le levier 16 est de préférence constitué par un anneau 16a relié au second segment 2 par un crochet 16b traversant un orifice pratiqué dans ce segment et dont un point constitue le point d'articulation 2c.

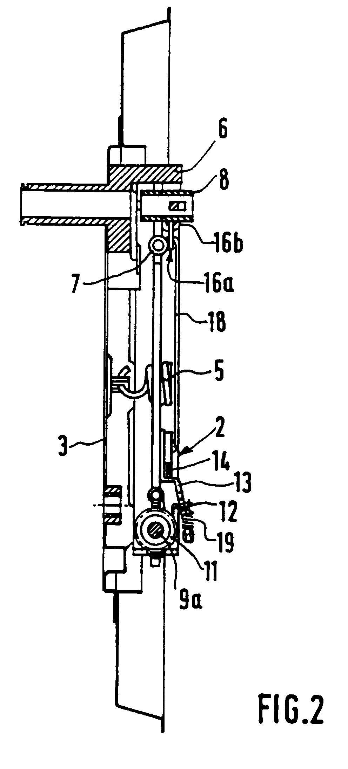

Comme le montre la Figure 2, la seconde extrémité 17b de la première tringle 17 et la première extrémité 18a de la seconde tringle 18 sont repliées en boucle sur l'anneau 16a de manière à l'enserrer, cet agencement permettant de réaliser très simplement une timonerie dans laquelle les frottements sont négligeables.

Par ailleurs, le point d'articulation 2c du levier 16, la seconde extrémité 17b de la première tringle, et la première extrémité 17a de cette même tringle forment un angle voisin de 120° ou même supérieur à cette valeur, et les première et seconde extrémités 18a, 18b de la seconde tringle 18 déterminent une direction au moins voisine de celle de la bissectrice de cet angle.

Grâce à cet agencement, tout écartement des points 1c et 2c se traduit, en raison de relations trigonométriques, par un mouvement de plus grande amplitude de la tige 18.

Pour cette raison, cet agencement contribue donc à permettre l'utilisation d'un levier dont le point d'articulation 2c soit sensiblement équidistant de la seconde extrémité 17b de la première tringle 17 et de la première extrémité 18a de la seconde tringle 18, c'est-à-dire d'un levier susceptible d'adopter la forme décrite d'un anneau et d'un crochet.

Le fonctionnement du dispositif décrit est le suivant.

A l'actionnement de l'écarteur 8, les segments 1 et 2 quittent leur appui 6.

Lors de ce mouvement, la tringle 17 et le crochet 16b tendent à s'aligner imprimant, par l'intermédiaire de l'anneau 16a et de la seconde tringle 18, une rotation anti-horaire au balancier 13 autour de son axe 14.

Le cliquet 12, armé par un ressort 19 et guidé latéralement sur la roue dentée 11, glisse sur la dent sur laquelle il repose puis tombe dans le creux suivant.

Durant cette manoeuvre, l'écrou 9b ne tourne pas dans la mesure où les ressorts 7, 10 et 15 font apparaître entre l'écrou 9b et la vis 9a un couple anti-rotation supérieur au couple dû au frottement du cliquet 12 sur la roue dentée 11.

Au retour, les segments 1 et 2 se rapprochent et retrouvent leur appui 6. La tringle 17 et le crochet 16b reprennent leurs positions initiales, libérant le balancier 13 qui sous l'effet du ressort 15 tourne dans le sens horaire.

Ce mouvement entraîne, par l'intermédiaire du cliquet 12, une rotation de l'écrou 9b, le couple moteur donné par le ressort 15 étant supérieur au couple anti-rotation de l'écrou 9b.

La rotation de ce dernier provoque un allongement de l'entretoise, écartant ainsi les segments 1 et 2 au niveau de leurs secondes extrémités 1b, 2b et compensant l'usure de ces segments.

## Revendications

1. Dispositif de freinage à tambour, comportant :
- une chape (3) ;
- des premier et second segments de frein arqués (1, 2), présentant des premières et secondes extrémités respectives (1a, 2a ; 1b, 2b) placées en vis-à-vis ;
- un écarteur (8) solidaire de la chape et susceptible d'être actionné pour éloigner l'une de l'autre les premières extrémités des deux segments ;
- une entretoise (9) dont la longueur est réglée par un élément de vis (9b) et qui maintient les secondes extrémités (1b, 2b) des deux segments à distance l'une de l'autre ; et
- des moyens de réglage pour régler la longueur de l'entretoise en fonction d'une usure des segments, ces moyens comprenant une roue dentée (11) solidaire de l'élément de vis, un balancier à cliquet (13, 12), articulé sur le second segment (2) et susceptible de faire tourner la roue dentée dans un sens propre à allonger l'entretoise, et une timonerie pour actionner le balancier, cette timonerie comprenant elle-même un levier (16) articulé en un point (2c) du second segment et deux tringles (17, 18) reliées par ce levier, la première tringle ayant une première extrémité (17a) articulée sur un point d'appui (1c) et une seconde extrémité (17b) articulée sur le levier pour mouvoir ce dernier en cas d'actionnement de l'écarteur, et la seconde tringle ayant une première extrémité (18a) articulée sur le levier et une seconde extrémité (18b) articulée sur le balancier de manière à transmettre à ce dernier le mouvement du levier caractérisé en ce que le point d'appui (1c) est un point du premier segment (1) alors que les premier et second segments (1,2) ont montés flottants sur la chape (3).

2. Dispositif suivant la revendication 1, caractérisé en ce que le point (2c) d'articulation du levier, la seconde extrémité (17b) de la première tringle, et la première extrémité (17a) de cette même tringle déterminent un premier angle voisin de 120° ou supérieur à cette valeur.

3. Dispositif suivant la revendication 2, caractérisé en ce que le point d'articulation (2c) du levier est sensiblement à équidistance de la seconde extrémité (17b) de la première tringle et de la première extrémité (18a) de la seconde tringle.

4. Dispositif suivant la revendication 3, caractérisé en ce que les première et seconde extrémités (18a, 18b) de la seconde tringle déterminent une direction au moins voisine de celle de la bissectrice dudit premier angle.

5. Dispositif suivant la revendication 1, caractérisé en ce que ledit levier (16) comprend essentiellement un anneau (16a) relié au second segment par un crochet (16b) traversant un orifice pratiqué dans ce segment, et en ce que la seconde extrémité (17b) de la première tringle et la première extrémité (18a) de la seconde tringle sont repliées en boucle sur l'anneau de manière à l'enserrer.

6. Dispositif suivant la revendication 1, caractérisé en ce que l'écarteur est de type mécanique.

## Patentansprüche

1. Trommelbremsenvorrichtung mit:
- einer Abdeckkappe (3);
- einer ersten und einer zweiten bogenförmigen Bremsbacke (1, 2) mit jeweiligen einander gegenüberliegenden ersten und zweiten Enden (1a, 2a; 1b, 2b);
- einem mit der Abdeckkappe fest verbundenen Spreizer (8), der betätigt werden kann, um die beiden ersten Enden der zwei Backen voneinander zu entfernen;
- einer Strebe (9), deren Länge mittels eines Schraubenelementes (9b) eingestellt wird und die die beiden zweiten Enden (1b, 2b) der zwei Backen im Abstand voneinander hält; sowie
- Einstellmitteln, um die Länge der Strebe in Abhängigkeit von einem Verschleiß der Backen einzustellen, wobei diese Mittel ein mit dem Schraubenelement fest verbundenen Zahnrad (11), einen an der zweiten Backe (2) angelenkten Schwinghebel mit Sperrklinke (12, 13), der das Zahnrad in eine die Strebe verlängernde Richtung drehen kann, sowie ein Gestänge zum Betätigen des Schwinghebels aufweisen, wobei dieses Gestänge seinerseits ebenfalls einen in einem Punkt (2c) der zweiten Backe angelenkten Hebel (16) sowie zwei durch diesen Hebel verbundene Stangen (17, 18) aufweist, wobei die erste Stange ein in einem Abstützpunkt (1c) angelenktes erstes Ende (17a) und ein an dem Hebel zum Bewegen desselben bei Betätigung des Abstandshalters angelenktes zweites Ende (17b) hat, und wobei die zweite Stange ein an dem Hebel angelenktes erstes Ende (18a) sowie ein zweites Ende (18b) aufweist, welches an dem Schwinghebel derart angelenkt ist, daß die Bewegung des Hebels auf diesen übertragen wird, dadurch gekennzeichnet, daß der Abstützpunkt (1c) ein Punkt der ersten Backe (1) ist, während die erste und die zweite Bremsbacke (1, 2) schwebend an der Abdeckkappe (3) angebracht sind.

2. Vorrichtung nach Anspruch 1, dadurch gekennzeichnet, daß der Anlenkpunkt (2c) des Hebels, das zweite Ende (17b) der ersten Stange sowie das erste Ende (17a) derselben Stange einen nahe 120° oder über diesem Wert gelegenen ersten Winkel festlegen.

3. Vorrichtung nach Anspruch 2, dadurch gekennzeichnet, daß der Anlenkpunkt (2c) des Hebels im wesentlichen in gleichem Abstand zu dem zweiten Ende (17b) der ersten Stange und zu dem ersten Ende (18a) der zweiten Stange gelegen ist.

4. Vorrichtung nach Anspruch 3, dadurch gekennzeichnet, daß das erste und das zweite Ende (18a, 18b) der zweiten Stange eine wenigstens nahe der Richtung der Winkelhalbierenden des ersten Winkels gelegene Richtung festlegen.

5. Vorrichtung nach Anspruch 1, dadurch gekennzeichnet, daß der Hebel (16) im wesentlichen einen Ring (16a) aufweist, der mit der zweiten Backe durch einen Haken (16b) verbunden ist, der durch eine in dieser Backe ausgebildete Öffnung geführt ist, und daß das zweite Ende (17b) der ersten Stange und das erste Ende (18a) der zweiten Stange schlaufenartig über den Ring derart gebogen sind, daß sie diesen umschließen.

6. Vorrichtung nach Anspruch 1, dadurch gekennzeichnet, daß der Spreizer mechanischen Typs ist.

## Claims

1. Drum-brake device comprising:
- a clevis (3);
- first and second arcuate brake shoes (1, 2) having respective first and second ends (1a, 2a; 1b, 2b) facing one another;
- an expander (8) fastened to the clevis and actuatable to move apart the first ends of the two shoes;
- a spacer (9) of which the length is adjusted by a screw element (9b) and which holds the second ends (1b, 2b) of the two shoes at a distance from one another; and
- regulation means for regulating the length of the spacer in dependence on the wear of the shoes, said means comprising a toothed wheel (11) fastened to the screw element, a rocking lever which carries a click (13, 12) and is pivoted on the second shoe (2) and which is capable of turning said toothed wheel in a direction such as to lengthen the spacer, and a linkage for actuating the rocking lever, said linkage in turn comprising a lever (16) pivoted at a point (2c) on the second shoe and two rods (17, 18) connected by said lever, the first rod having a first end (17a) pivoted on a support point (1c) and a second end (17b) pivoted on said lever to move the latter in the event of the actuation of the expander, and the second rod having a first end (18a) pivoted on the lever and a second end (18b) pivoted on the rocking lever such as to transmit to the latter the motion of the lever, characterized in that the support point is a point on the first shoe whereas the first and second shoes are mounted floating on the clevis.

2. Device according to Claim 1, characterized in that the pivot point (2c) of the lever, the second end (17b) of the first rod, and the first end (17a) of this same rod define a first angle close to 120° or greater than that value.

3. Device according to Claim 2, characterized in that the pivot point (2c) of the lever is substantially equidistant from said second end (17b) of said first rod and from the first end (18a) of the second rod.

4. Device according to Claim 3, characterized in that the first and second ends (18a, 18b) of the second rod define a direction at least close to that of the bisector of the first angle.

5. Device according to Claim 1, characterized in that said lever (16) comprises essentially a ring (16a) connected to the second shoe by a hook (16b) passing through an aperture made in said shoe, and in that the second end (17b) of the first rod and the first end (18a) of the second rod are looped over the ring such as to engage around it.

6. Device according to Claim 1, characterized in that the expander is of a mechanical type.
